# EUROPÄISCHE PATENTANMELDUNG

(11) **EP 0 992 741 A2**
(43) Veröffentlichungstag der Anmeldung: **12.04.2000**
(21) Anmeldenummer: 99119779.9
(22) Anmeldetag: 06.10.1999
(51) Int. Cl.: F24D 3/14

(54) **Brüstungspaneel für eine Fassade oder für eine Fensterwand sowie eine Fassade oder Fensterwand mit demselben**

(30) Priorität: 06.10.1998 DE 19847078; 07.12.1998 DE 19856374
(71) Anmelder: Metallbau Ralf Boetker Gmbh, 28816 Stuhr (DE)
(72) Erfinder: Boetker, André, 28211 Bremen (DE); Grünewald, Jens-Martin, 28355 Bremen (DE)
(74) Vertreter: Winkler, Andreas, Dr.

(57) **Zusammenfassung**

Brüstungspaneel für eine Fassade oder eine Fensterwand, gekennzeichnet durch einen in dem Brüstungspaneel integrierten Heiz/Kühlkörper, sowie eine Fassade oder Fensterwand mit demselben.

## Beschreibung

Die vorliegende Erfindung betrifft ein Brüstungspaneel für eine Fassade oder für eine Fensterwand sowie eine Fassade oder Fensterwand mit demselben.

Aufgrund der heutigen hohen Grundstückspreise und Baukosten wird bei der Errichtung von Gebäuden noch mehr darauf geachtet, ein Optimum an Wohnraum- bzw. Nutzraumgröße zu erzielen. Dies gilt sowohl für Gebäude mit Fassaden in Pfosten-Riegel-Bauweise als auch Fensterwände aller Art. Fassaden sind nach ihrem sich an den Fassaden zumindest in früheren Zeiten stets wiederholenden Maßraster benannt. Sie werden aus Pfosten und Riegeln sowie Füllelementen aufgebaut. Die horizontal verlaufenden Riegel werden z.B. in Decken- und Brüstungshöhe an den Pfosten befestigt. Als Füllelemente können Scheiben in Festverglasung, Fensterelemente, Türelemente oder Paneele aller Art eingesetzt werden. Üblicherweise bestehen die Fassaden aus einer Festverglasung bzw. Fensterelementen und undurchsichtigen wärmedämmenden Brüstungspaneelen. Fensterwände bestehen aus einer Blendrahmen-Konstruktion, in deren Felder entweder Flügel-Elemente, wie Fenster oder Türflügel, oder Festverglasungen oder Paneele aller Art eingesetzt werden. Abweichend von der Pfosten-Bauweise erfolgt die Verglasung üblicherweise über Glasleisten von innen. Zur Erwärmung des Wohn- bzw. Nutzraumes sind üblicherweise den Fassaden auf der Raumseite Heizkörper vorgelagert, die den Wohn- bzw. Nutzraum verringern.

Der Erfindung liegt somit die Aufgabe zugrunde, bei Gebäuden mit einer Fassade oder einer Fensterwand einen größeren Wohn- bzw. Nutzraum zur Verfügung zu stellen.

Erfindungsgemäß wird diese Aufgabe bei dem Brüstungspaneel gelöst durch einen in dem Brüstungspaneel integrierten Heiz/Kühlkörper.

Diese Aufgabe wird zudem bei einer Fassade oder Fensterwand mit mindestens einem Füllelement dadurch gelöst, daß mindestens ein Füllelement ein Brüstungspaneel nach einem der Ansprüche 1 bis 37 ist.

Außenwand sowie eine dazwischen befindliche Dämmschicht, wobei der Heiz/Kühlkörper zwischen der Dämmschicht und der Innenwand angeordnet ist.

Andererseits kann das Brüstungspaneel gemäß einer weiteren besonderen Ausführungsform gekennzeichnet sein durch eine im eingesetzten Zustand zu der Raumseite zeigende Innenwand und eine Dämmschicht. Eine derartige Ausführungsform weist zumindest keine separate Außenwand auf.

Eine besondere Ausführungsform des Brüstungspaneels ist gekennzeichnet durch einen in ein Feld der Fassade oder Fensterwand einsetzbaren Profilrahmen.

Dabei kann vorgesehen sein, daß der Profilrahmen einen umlaufenden konstanten Querschnitt aufweist. Dies ermöglicht eine relativ unkomplizierte Fertigung des Profilrahmens, da Probleme im Gehrungsbereich bei Schnitten unter 45° durch aufeinandertreffende unterschiedliche Profilquerschnitte vermieden und damit aufwendige Anpaßarbeiten von vornherein unterbunden werden.

Günstigerweise ist der Profilrahmen aus Aluminium. Dies ermöglicht aufgrund des geringen Gewichts ein einfaches Handling des Brüstungspaneels. Darüber hinaus läßt sich die Gestalt des Profils durch das bei Aluminium mögliche Strangpreßverfahren nahezu frei wählen.

Vorteilhafterweise ist der Heiz/Kühlkörper in der Art einer Glasscheibenmontage in dem Profilrahmen eingefaßt.

Dabei kann vorgesehen sein, daß der Heiz/Kühlkörper durch eine auf der Raumseite vorgesehene Anlageaufkantung und auf seiner davon abgewandten Rückseite vorgesehene Haltewinkel eingefaßt ist.

Günstigerweise ist der Heiz/Kühlkörper in dem Profilrahmen gleitend gelagert. Dadurch werden relative Bewegungen zwischen dem Profilrahmen und dem Heiz/Kühlkörper aufgrund unterschiedlicher Temperaturen und Wärmeausdehnungskoeffizienten zugelassen.

Insbesondere kann dabei vorgesehen sein, daß der Heiz/Kühlkörper gleitend gelagert ist, indem eine umlaufende Dehnungsfuge in dem Profilrahmen im Bereich der Anlageaufkantung vorgesehen ist, in die eine Pufferlage zur punktuellen Fixierung des Heiz/Kühlkörpers punktuell eingebracht ist, und eine Trockenverglasungsdichtung, eine untere Klotzung aus PA 66-Abschnitten sowie eine Zwischenlage aus PA66 zwischen den Haltewinkeln und dem Heiz/Kühlkörper vorgesehen sind. Die Fuge dient zur Aufnahme der möglichen Dehnung des Heiz/Kühlkörpers. Die Trockenverglasungsdichtung, Klotzung und Zwischenlage ermöglichen ein Gleiten des Heiz/Kühlkörpers.

In einer weiteren besonderen Ausführungsform der Erfindung ist das Brüstungspaneel mit einer Zweipunktlagerung wie bei Verglasungseinheiten bei einer Trockenverglasung in ein Feld der Fassade oder Fensterwand einsetzbar. Dies gewährleistet eine ungehinderte Wärmedehnung des Brüstungspaneels.

Günstigerweise ist zwischen der Dämmschicht und dem Heiz/Kühlkörper eine Brüstungspaneelinnenhaut angeordnet, die sich parallel zu der Innenwand erstreckt. Die Brüstungspaneelinnenhaut dient sowohl zum Schutz der Dämmschicht vor zu hohen Temperaturen als auch zur Wärmedämmung nach außen.

Insbesondere kann dabei vorgesehen sein, daß die Brüstungspaneelinnenhaut aus Aluminiumblech besteht.

Günstigerweise ist das Aluminiumblech poliert. Poliertes Aluminiumblech besitzt die Eigenschaft, nur sehr wenig Wärmestrahlung des gegenüberliegenden Heizkörpers zu absorbieren und damit auch keine wesentliche Temperaturerhöhung durch Wärmestrahlungsaustausch zu erfahren, und paßt sich unabhängig von der Heizkörpertemperatur der Lufttemperatur im Konvektionsschacht an. Das polierte Alumniniumblech trägt außerdem zur Dämmwirkung des Brüstungspaneels bei, indem dieser 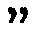 Spiegler", wie der in der Wärmelehre bezeichnet wird, durch sein geringes Absorptionsvermögen und seinen hohen reflektierten Anteil an Wärmestrahlung die Wärmeleitung nach außen erschwert.

Vorteilhafterweise weist der Profilrahmen auf der Raumseite geringere Querschnittsabmessungen als auf der Außenseite auf. Diese liefert eine Fuge, durch die Luft zur Hinterlüftung des Heiz/Kühlkörpers strömen kann. Insbesondere kann dabei vorgesehen sein, daß sich der Profilrahmen von der Außenseite zu der Raumseite stufig verjüngt.

Vorteilhafterweise weist der Profilrahmen im Bereich des Heiz/Kühlkörpers Durchbrüche zur Hinterlüftung auf.

Weiterhin kann vorgesehen sein, daß die Außenwand mit dem Profilrahmen lösbar verbindbar ist. Dies ermöglicht die Verwendung des Grundaufbaus des Brüstungspaneels in vielen Anwendungsfällen, da lediglich die Gestalt und Farbe der Außenwand an die jeweilige Außenfassade angepaßt werden müssen.

Insbesondere kann dabei vorgesehen sein, daß die Außenwand gemeinsam mit dem Profilrahmen in einem Falz eines Feldes der Fassade oder Fensterwand klemmbar ist.

Vorteilhafterweise besteht die Außenwand aus NE-Metallen, Glas, Kunststoff oder Photovoltaikelementen.

Günstigerweise ist die Innenwand Bestandteil des Heiz/Kühlkörpers.

Weiterhin kann vorgesehen sein, daß die Dämmschicht aus Mineralwolle besteht.

Andererseits kann auch vorgesehen sein, daß die Dämmschicht aus Schaumstoff besteht.

Günstigerweise weist die Dämmschicht einen Wärmedurchgangskoeffizienten im Bereich von 0,3 bis 2,5 W/m²K auf.

Besonders bevorzugt besteht die Dämmschicht aus einem Vakuum-Isolations-Paneel. Ein derartiges Vakuum-Isolations-Paneel weist einen besonders niedrigen Wärmedurchgangskoeffizienten auf, so daß die Dämmschichtdicke geringer gewählt werden kann und somit eine größere, für den Heiz/Kühlkörper und die Hinterlüftung verbleibende Bautiefe bzw. eine geringere Gesamtbautiefe des Brüstungspaneels möglich ist, wobei in letzerem Fall eher Standard-Profile für die Pfosten und Riegel zur Erstellung einer auf der Raumseite planen Fassade oder Fensterwand möglich ist.

Günstigerweise liegt der dabei der Wärmedurchgangskoeffizient im Bereich von 0,3 bis 0,002 W/m²K.

Andererseits kann auch vorgesehen sein, daß die Dämmschicht aus einer transparenten Wärmedämmung besteht. Die transparente Wärmedämmung kann z.B. aus Glasfaserkabeln bestehen, deren Stirnflächen des einen Endes zur Außenseite zeigen. Die transparente Wärmedämmung kann unter Umständen den Wärmeträger für den Heizkörper, z.B. für die Warmwasseraufbereitung, erwärmen.

Vorteilhafterweise ist der Heizkörper ein Flachheizkörper. Damit wird gewährleistet, daß der Heizkörper nur eine geringe Bautiefe aufweist.

Günstigerweise ist der Kühlkörper ein Flachkühlkörper.

Vorteilhafterweise dient eine Flüssigkeit als Wärme- bzw. Kälteträger.

Vorzugsweise weist der Heiz/Kühlkörper keine Bedienelemente auf. Bedienelemente würden nur die Erscheinung der Fassade auf der Raumseite beeinträchtigen.

Ebenfalls weist der Heiz/Kühlkörper günstigerweise keine Regelelemente auf. Regelelemente würden ebenfalls die Erscheinung der Fassade oder Fensterwand auf der Raumseite beeinträchtigen. Es ist daher von vornherein eine Regelung vorzusehen, bei der z.B. der Temperaturfühler und -einsteller getrennt vom Ventil angeordnet werden können sowie die Heizflächen gruppenweise geregelt werden. Ebenso ist von einer örtlichen Entlüftung an den Heizkörpern abzusehen und eine zentrale Entlüftung vorzusehen.

Weiterhin kann vorgesehen sein, daß der Heiz/Kühlkörper eine glatte, zur Dämmschicht zeigende Rückwand aufweist.

Andererseits kann auch vorgesehen sein, daß der Heiz/Kühlkörper eine profilierte, zur Dämmschicht zeigende Rückwand aufweist.

Günstigerweise weist der Heiz/Kühlkörper flexible Anschlußleitungen für die Versorgung mit dem Wärme/Kälteträger auf. Dies ermöglicht ein Anschließen des Heiz/Kühlkörpers an das Rohrnetz nach Einsetzen des Brüstungspaneels in ein Feld.

Günstigerweise sind die Anschlußleitungen aus Kunststoff.

Einer weitere besondere Ausführungsform der Fassade oder Fensterwand kann gekennzeichnet sein durch einen über dem Brüstungspaneel befindlichen oberen Riegel, der an seiner Unterseite abgeschrägt ist. Dies liefert eine besonders große Fuge für die Hinterlüftung des Heiz/Kühlkörpers.

Dabei kann vorgesehen sein, daß der obere Riegel einteilig ausgebildet ist.

Alternativ kann vorgesehen sein, daß der obere Riegel aus einem Standard-Riegelprofil und einer damit lösbar verbundenen abgeschrägten Riegeldeckschale besteht. Durch Entfernen der Riegeldeckschale ist die Rückwand des Heiz/Kühlkörpers z.B. zum Reinigen gut zugänglich.

Eine weitere besondere Ausführungsform ist gekennzeichnet durch einen unter dem Brüstungspaneel befindlichen unteren Riegel, der an seiner Oberseite abgeschrägt ist. Dies liefert eine besonders große Fuge für die Hinterlüftung des Heiz/Kühlkörpers unterhalb des Brüstungspaneels.

Dabei kann vorgesehen sein, daß der untere Riegel einteilig ausgebildet ist.

Alternativ kann vorgesehen sein, daß der untere Riegel aus einem Standard-Riegelprofil und einer damit lösbar verbundenen abgeschrägten Riegeldeckschale besteht.

Schließlich kann vorgesehen sein, daß die Pfosten und Riegel aus NE-Metallen, Kunststoff, Holz, Stahl oder Edelstahl bestehen.

Der Erfindung liegt die überraschende Erkenntnis zugrunde, daß durch eine Integration eines Heiz/Kühlkörpers in einem Brüstungspaneel ein größerer Wohn- bzw. Nutzraum bei Gebäuden mit einer Fassade oder einer Fensterwand erzielt wird. Darüber hinaus weist die resultierende Fassade oder Fensterwand auf der Raumseite eine ansprechendere optische Erscheinung auf.

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläutert ist. Dabei zeigt:
Fig. 1 eine schematische Innenansicht einer besonderen Ausführungsform der erfindungsgemäßen Fassade;
Fig. 2 eine Vertikalschnittansicht entlang der Linie A-A von Fig. 1;
Fig. 3 einen Horizontalschnitt entlang der Linie B-B von Fig. 1;
Fig. 4 einen Horizontalschnitt entlang der Linie C-C von Fig. 1;
Fig. 5 eine zu Fig. 2 entsprechende Vertikalschnittansicht einer weiteren besonderen Ausführungsform des erfindungsgemäßen Brüstungspaneels; und
Fig. 6 einen zu Fig. 3 entsprechenden Horizontalschnitt durch die weitere besondere Ausführungform des erfindungsgemäßen Brüstungspaneels.

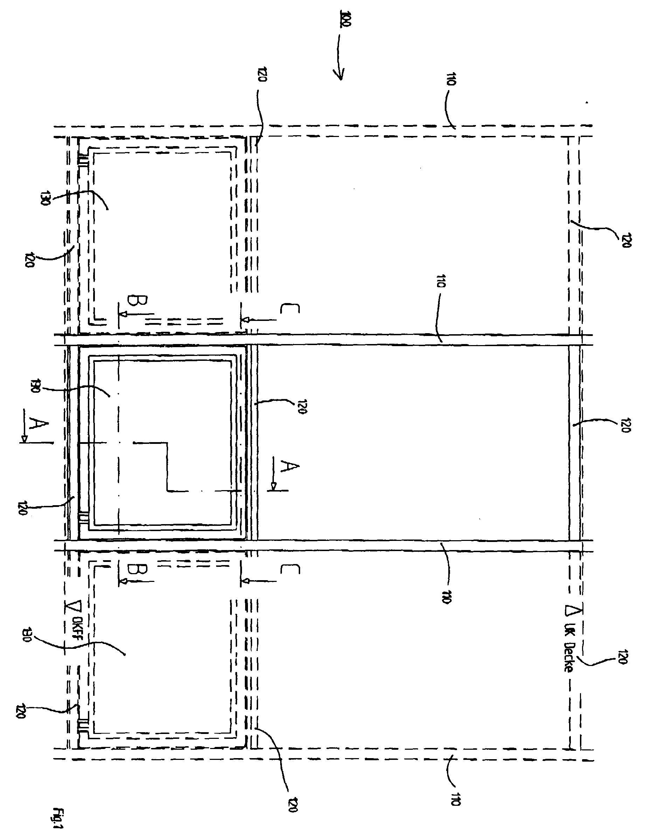

Fig. 1 zeigt eine schematische Innenansicht einer besonderen Ausführungsform der erfindungsgemäßen Fassade. Eine erfindungsgemäße Fensterwand könnte entsprechend gestaltet sein. Die Fassade 100 besteht aus Pfosten 110, Riegeln 120 sowie Füllelementen, bei denen es sich im oberen Bereich um Scheiben in Festverglasung (nicht gezeigt) handeln kann und die im unteren Bereich Brüstungspaneele 130 sind.

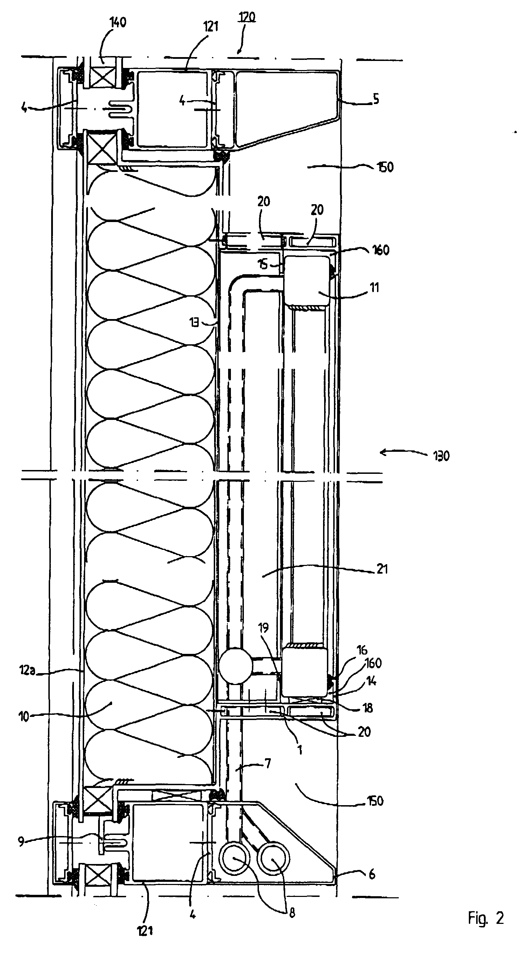

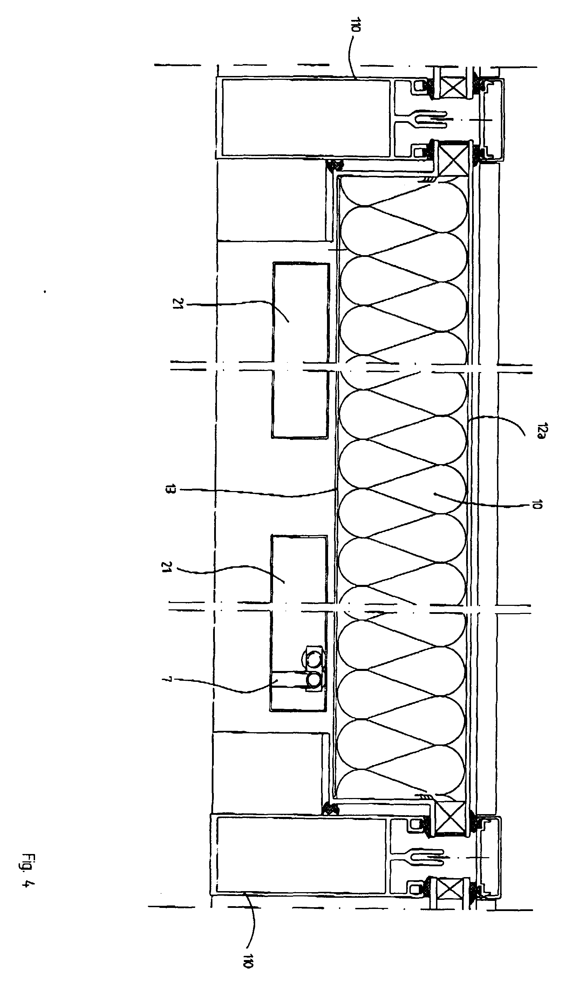

Fig. 2 bis Fig. 4 zeigen jeweilige Schnittansichten von Fig. 1. Das Brüstungspaneel 130 weist einen Profilrahmen 1 aus einem Aluminium-Strangpreßprofil mit umlaufend konstantem Querschnitt mit geschraubten Eckverbindern 20 zur Aufnahme eines Heizkörpes 11 in Form eines Flachheizkörpers und eine im eingesetzten Zustand zu der Außenseite zeigende Außenwand 12a auf. Eine Innenwand 12b wird von der zur Raumseite zeigenden Fläche des Heizkörpers 11 gebildet. Die oberen und unteren Riegel 120 bestehen aus einem jeweiligen Aluminium-Standard-Strangpreßprofil 121 und einer oberen 5 bzw. unteren Riegeldeckschale 6, die über ein Klemmprofil 4 in Standardausführung mit dem jeweiligen StandardStrangpreßprofil 121 verbunden sind. Zur Außenseite hin sind die Standard-Strangpreßprofile 121 derart ausgestaltet, daß mittels eines weiteren Klemmprofils 4 eine Scheibe 140 und das Brüstungspaneel 130 in vertikaler Anordnung einsetzbar sind. Durch eine schräge Gestaltung der oberen und unteren Riegeldeckschalen 5, 6 entsteht auf der Raumseite eine große Fuge 150 ober- und unterhalb des Brüstungspaneels 130, die sich aufgrund der geringen Querschnittsabmessungen des Profilrahmens 1 auf der Raumseite auch an den übrigen Seiten des Brüstungspaneels mit geringerem Maß fortsetzt und somit umlaufend ist. Die Kombination der Fuge 150 mit Durchbrüchen 21 ergibt eine Hinterlüftung 22 des Heizkörpers 11. Da die obere Riegeldeckschale 5 relativ leicht entfernbar ist, ist auf diese Weise eine Reinigungsmöglichkeit der Rückwand des Heizkörpers 11 gegeben. Die untere Riegeldeckschale 6 ist ebenfalls leicht zu entfernen und zu montieren und verbirgt Strangleitungen 8 des Heizungsrohrnetzes. Dies ermöglicht es, den Heizkörper 11 nach Einsetzen des Brüstungspaneels 130 in die Fassade 100 auf einfache Weise an die Strangleitungen 8 anzuschließen. Wenn der Heizkörper 11 bereits werksseitig mit Anschlußleitungen 7 aus flexiblem Kunststoff versehen ist kann die Montage der Strangleitungen 8 gewissermaßen 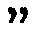 Aufputz'' nach Errichten der Fassade 100 erfolgen. Durch diese Bauweise ergibt sich somit ganz nebenbei auch ein Revisionsschacht für eventuelle Arbeiten am Heizungsrohrnetz. Der Einbau des Brüstungspaneels 130 durch einen Metallbauer kann somit zeitlich unabhängig von den Anschlußarbeiten eines Heizungsbauers erfolgen. Dadurch werden Probleme der Koordination zwischen diesen Gewerken von vornherein vermieden, außerdem erfordert ein vollständig in einer Werkstatt vorfertigbares Brüstungspaneel selbst keine Anpassung oder Nacharbeit nach dem Einsetzen in die Fassade und kann deshalb durch den hohen Vorfertigungsgrad wie ein herkömmliches Paneel ohne einen wesentlich höheren Arbeitsaufwand montiert werden. Zur Unterstützung der Montagefreundlichkeit für einen Metallbauer sind zwei kurze Winkel 9 aus Edelstahlblech im Bereich des unteren Riegels 120 eingesetzt, wodurch ein selbständiges Herausdrücken des Brüstungspaneels 130 aufgrund seiner Schwerpunktlage außerhalb der Glasebene der Fassade 100 vor einer endgültigen Verleistung verhindert wird.

Der Heizkörper 11 ist durch eine äußere Anlageaufkantung 14 und rückwärtige Halterung durch Haltewinkel 15 aus Aluminium in der Art einer Glasscheibenmontage in dem Brüstungspaneel 130 eingefaßt Relative Bewegungen zwischen dem Profilrahmen 1 und dem Heizkörper 11 aufgrund unterschiedlicher Temperaturen und Wärmausdehnungskoeffizienten werden durch eine gleitende Lagerung der Heizkörpers 11 in dem Profilrahmen 1 ermöglicht. Eine umlaufende Dehnungsfuge 160 ist derart breit gewählt, daß sie eine Dehnung des Heizkörpers aufnehmen kann. Eine in die Fuge 160 eingebrachte Pufferlage 17 ans Silikon, das üblicherweise für Brandschutzverglasungen eingesetzt wird, ist ausreichend elastisch, so daß keine Dehnungsbehinderung eintritt. Das Silikon wird nur punktuell eingespritzt, um eine Fixierung des Heizkörpers 11 in dem Profilrahmen 1 herbeizuführen. Die Gleitung der Heizkörpers 11 wird durch die Verwendung einer Trockenverglasungsdichtung 16 aus EPDM und eine untere Klotzung auf PA66-Abschnitten 18 sowie eine Zwischenlage 19 aus PA66 zwischen den rückwärtigen Haltewinkeln 15 und dem Heizkörper 11 ermöglicht. Durch Anwenden der aus dem Verglasungsbereich bekannten und bewährten Technik der Zweipunktlagerung von Verglasungseinheiten bei einer Trockenverglasung wird eine ungehinderte Wärmedehnung des Brüstungspaneels 130 gewährleistet.

Eine Brüstungspaneelinnenhaut 13 teilt den Profilrahmen 1 in zwei Profilkammern auf und dient zum Schutz der Dämmschicht 10 vor zu hoben Temperaturen durch den Heizkörper 11 und gleichzeitig zur Erhöhung der Dämmwirkung des Brüstungspaneels 130. Die Brüstungspaneelinnenhaut 13 besteht aus einem polierten Aluminiumblech, das ein besonders geringes Absorptionsvermögen und ein hohes Reflexionvermögen bzgl. der Wärmestrahlung aufweist.

Das Gewicht des Heizkörpers 11 wird über den unteren Teil des Profilrahmens 1 in die seitlichen Teile des Profilrahmens 1 und damit über den steifen Profilrahmen 1 in seiner Gesamtheit mit seiner Aussteifung durch die Brüstungspaneelinnenhaut 13 an die Pfosten-Riegel-Fassade an den beiden Riegelauflagen über eine Klotzung 18 abgetragen.

Wenn ein Raum mehrere Brüstungspaneele 130 mit jeweiligen Heizkörpern aufweist, werden die Heizkörper 11 mittels einer Gruppenregelung geregelt sowie über eine zentrale Entlüftung entlüftet.

Da das Brüstungspaneel 130 im Falzbereich wie ein herkömmliches Paneel in Sandwich-Paneel-Bauweise ausgebildet ist, kann die Außenwand 12a hinsichtlich ihrer Gestaltung und Farbgebung auf leichte Weise an die jeweilige Fassadenaußenansicht angepaßt werden.

Das Brüstungspaneel kann noch hinsichtlich seiner Dämmwirkung und Heizleistung verbessert werde; wenn als Dämmschicht ein Vakuum-Isolations-Paneel verwendet wird, welches mit einer Wärmeleitfähigkeit von 0,3 - 0,002 W/m² K aufwartet.

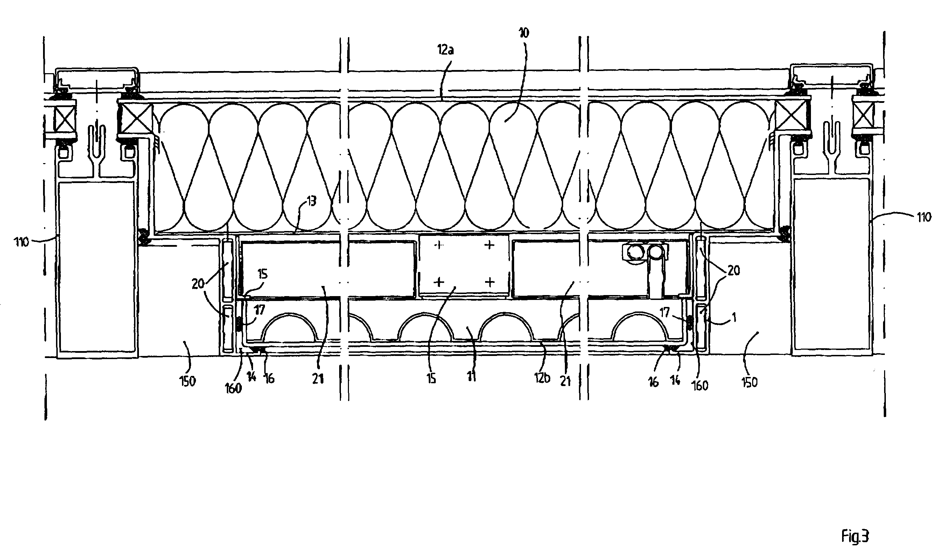

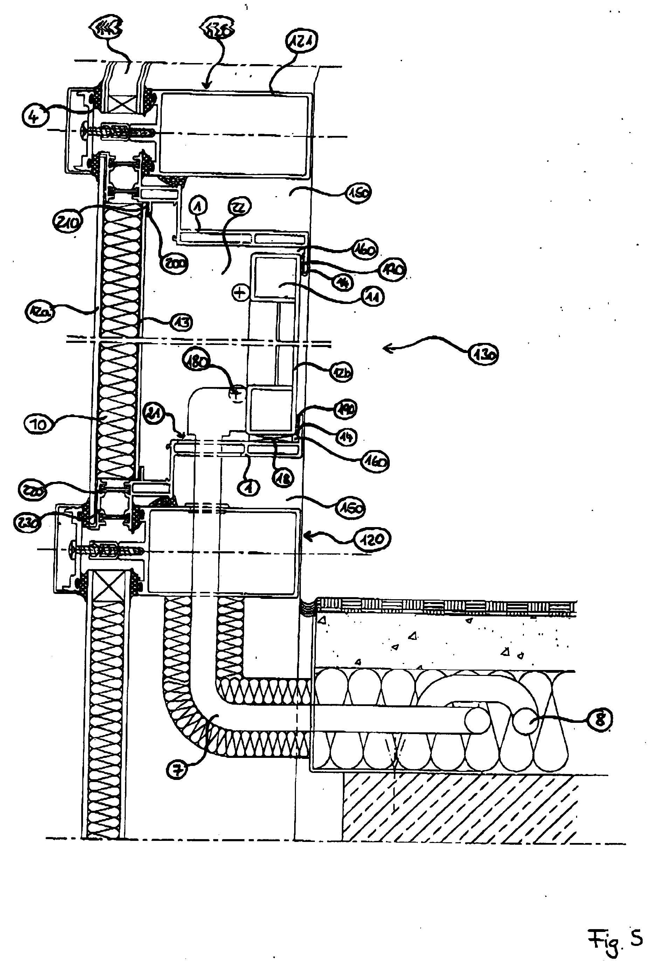

Fig. 5 zeigt eine zu Fig. 2 entsprechende Vertikalschnittanschitt einer weiteren besonderen Ausführungsform des erfindungsgemäßen Brüstungspaneels. Nachfolgend soll im wesentlichen nur auf die Unterschiede zu der in den Fig. 2 und 3 gezeigten Ausführungsform eingegangen werden. Ein wesentlicher Unterschied zu der vorangehend beschriebenen Ausführungsform liegt darin, daß die Dämmschicht 10 aus einem Vakuum-Isolations-Paneel besteht. Des weiteren ist in Fig. 5 anders als in der Fig. 2 auch eine mögliche Ausbildung des Fußbodenanschlusses dargestellt. Anschlußleitungen 7 für einen Heizkörper 11 werden dazu durch Durchbrüche 21 zur Hinterlüftung und durch einen Riegel 120 in den Fußbodenaufbau zu Strangleitungen 8 geführt.

In der in Fig. 5 gezeigten Ausführungsform ist der Profilrahmen 1 konstruktiv so gestaltet, daß mit einer Kleberaufnahme 200 eine Anlage zum Anbringen einer Brüstungspaneelinnenhaut 13 entsteht. Das Anbringen der Brüstungspaneelinnenhaut 13 erfolgt mit einem geeigneten Kleber 210. Durch Isolierstege 220 wird eine thermische Trennung zwischen der Innenschale 1 und Außenschale 230 realisiert. Die Außenschale 230 ist dazu geeignet, eine Außenwand 12a aus z.B. Blech, Keramik oder Glas aufzunehmen.

Durch die Verwendung der Brüstungspaneelinnenhaut 13 entsteht zwischen derselben und der Außenwand 12a ein Hohlraum, in dem die Dämmschicht 10 in Form eines VakuumIsolations-Paneels geschützt liegt. Der Hohlraum wiederum liegt im Bereich der durch die Fassade 100 und die thermische Trennung des Profilrahmens 1 bzw. der Außenschale 230 vorgegebenen Lage der Dämmzone der Gesamtkonstruktionen. Dies wiederum begünstigt den anzustrebenden geradlinigen Isothermenverlauf über die Gesamtfässaden- oder Fensterkonstruktion.

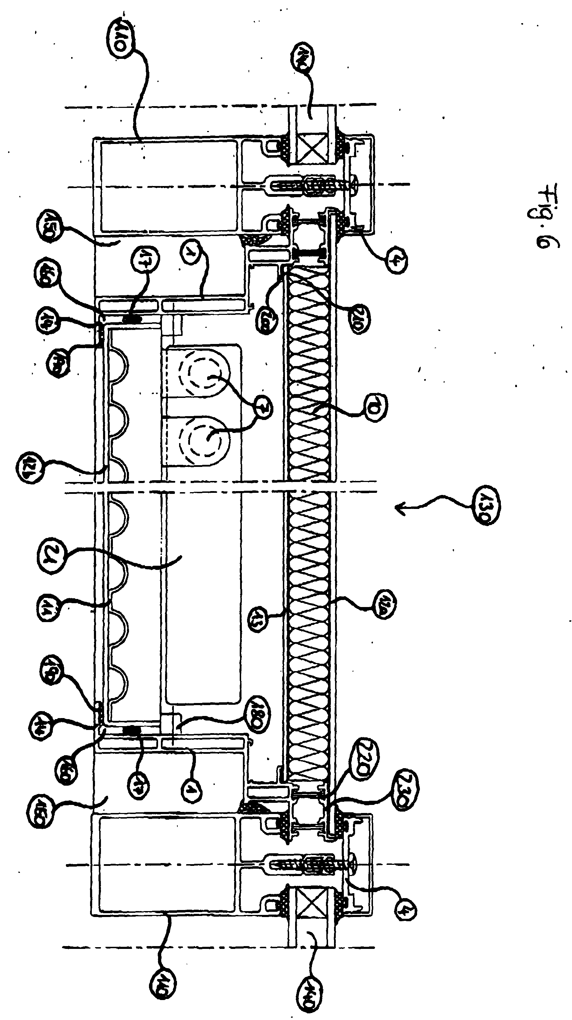

Als weitere Besonderheit weist die in Fig. 5 gezeigte Ausführungsform eines erfindungsgemäßen Brüstungspaneels keine Haltewinkel, sondern Exzenter 180 auf, mit denen der Heizkörper 11 gegen eine Anlagedichtung 190 gepreßt wird. Die Verwendung eines Exzenters vereinfacht einerseits die Fertigung des Brüstungspaneels, andererseits wird ein aus optischen Gründen eventuell vorhandenes Nachstellen des Heizkörpers möglich. Fig. 6 zeigt eine zu Fig. 3 entsprechende Horizontalschnittansicht durch die in Fig. 5 dargestellte besondere Ausführungsform des Brüstungspaneels.

Die in der vorstehenden Beschreibung sowie in den Ansprüchen und der beiliegenden Zeichnung offenbarten Merkmalen der Erfindung können sowohl einzeln als auch in beliebiger Kombination für die Verwirklichung der Erfindung in ihren verschiedenen Ausführungsformen wesentlich sein.

### Bezugszeichenliste

- 1: Profilrahmen
- 4: Klemmprofil
- 5: obere Riegeldeckschale
- 6: untere Riegeldeckschale
- 7: Anschlußleitungen
- 8: Strangleitungen
- 9: Winkel
- 10: Dämmschicht
- 11: Heizkörper
- 12a: Außenwand
- 12b: Innenwand
- 13: Brüstungspaneelinnenhaut
- 14: Anlageaufkantung
- 15: Haltewinkel
- 16: Trockenverglasungsdichtung
- 17: Pufferlage
- 18: PA66-Abschnitt
- 19: Zwischenlage
- 20: Eckverbinder
- 21: Durchbrüche
- 22: Hinterlüftung
- 100: Fassade
- 110: Pfosten
- 120: Riegel
- 121: Standard-Strangpreßprofil
- 130: Brüstungspaneel
- 140: Scheibe
- 150: Fuge
- 160: Dehnungsfuge
- 180: Exzenter
- 190: Anlagedichtung
- 200: Kleberaufnahme
- 210: Kleber
- 220: Isoliersteg
- 230: Außenschale

## Patentansprüche

1. Brüstungspaneel (130) für eine Fassade (100) oder für eine Fensterwand, gekennzeichnet durch einen in dem Brüstungspaneel (130) integrierten Heiz/Kühlkörper (11).

2. Brüstungspaneel (130) nach Anspruch 1, gekennzeichnet durch eine im eingesetzten Zustand zu der Raumseite zeigende Innen-(12b) und eine im eingesetzten Zustand zu der Außenseite zeigende Außenwand (12a) sowie eine dazwischen befindliche Dämmschicht (10), wobei der Heiz/Kühlkörper (11) zwischen der Dämmschicht (10) und der Innenwand (12b) angeordnet ist.

3. Brüstungspaneel nach Anspruch 1, gekennzeichnet durch eine im eingesetzten Zustand zu der Raumseite zeigende Innenwand (12b) und eine Dämmschicht (10).

4. Brüstungspaneel nach einem der Ansprüche 1 bis 3, gekennzeichnet durch einen in ein Feld der Fassade (100) oder Fensterwand einsetzbaren Profilrahmen (1).

5. Brüstungspaneel nach Anspruch 4, dadurch gekennzeichnet, daß der Profilrahmen (1) einen umlaufend konstanten Querschnitt aufweist.

6. Brüstungspaneel nach Anspruch 4 oder 5, dadurch gekennzeichnet, daß der Profilrahmen (1) aus Aluminium ist.

7. Brüstungspaneel nach einem der Ansprüche 4 bis 6, dadurch gekennzeichnet, daß der Heiz/Kühlkörper (11) in der Art einer Glasscheibenmontage in dem Profilrahmen (1) eingefäßt ist.

8. Brüstungspaneel nach Anspruch 7, dadurch gekennzeichnet, daß der Heiz/Kühlkörper (11) durch eine auf der Raumseite vorgesehene Anlageaufkantung (14) und auf seiner davon abgewandten Rückseite vorgesehene Haltewinkel (15) eingefaßt ist.

9. Brüstungspaneel nach einem der Ansprüche 4 bis 8, dadurch gekennzeichnet, daß der Heiz/Kühlkörper (11) in dem Profilrahmen gleitend gelagert ist.

10. Brüstungspaneel nach Anspruch 9, dadurch gekennzeichnet, daß der Heiz/Kühlkörper (11) gleitend gelagert ist, indem in dem Profilrahmen (1) eine umlaufende Dehnungsfuge (160) im Bereich der Anlageaufkantung (14) vorgesehen ist, in die eine Pufferlage (17) zur punktuellen Fixierung des Heiz/Kühlkörpers (11) punktuell eingebracht ist, und eine Trockenverglasungsdichtung (16), eine untere Klotzung aus PA66-Abschnitten (18) sowie eine Zwischenlage (19) aus PA 66 zwischen den Haltewinkeln (15) und dem Heiz/Kühlkörper (11) vorgesehen sind.

11. Brüstungspaneel nach einen der vorangehenden Ansprüche, dadurch gekennzeichnet, daß es mit einer Zweipunktlagerung wie bei Verglasungseinheiten bei einer Trockenverglasung in ein Feld der Fassade (100) oder Fensterwand einsetzbar ist.

12. Brüstungspaneel nach einem der Ansprüche 2 bis 11, dadurch gekennzeichnet, daß zwischen der Dämmschicht (10) und dem Heiz/Kühlkörper (11) eine Brüstungspaneelinnenhaut (13) angeordnet ist, die sich parallel zu der Innenwand (12b) erstreckt.

13. Brüstungspaneel nach Anspruch 12, dadurch gekennzeichnet, daß die Brüstungspaneelinnenhaut (13) aus Aluminiumblech besteht.

14. Brüstungspaneel nach Anspruch 13, dadurch gekennzeichnet, daß das Aluminiumblech poliert ist.

15. Brüstungspaneel nach einem der Ansprüche 4 bis 14, dadurch gekennzeichnet, daß der Profilrahmen (1) auf der Raumseite geringere Querschnittsabmessungen als auf der Außenseite aufweist.

16. Brüstungspaneel nach Anspruch 15, dadurch gekennzeichnet, daß sich der Profilrahmen (1) von der Außenseite zu der Raumseite stufig verjüngt.

17. Brüstungspaneel nach Anspruch 15 oder 16, dadurch gekennzeichnet, daß der Profilrahmen (1) im Bereich des Heiz/Kühlkörpers (11) Durchbrüche (21) zur Hinterlüftung aufweist.

18. Brüstungspaneel nach einem der vorangehenden Ansprüche, dadurch gekennzeichnet, daß die Außenwand (12a) mit dem Profilrahmen (1) lösbar verbindbar ist.

19. Brüstungspaneel nach einem der vorangehenden Ansprüche, dadurch gekennzeichnet, daß die Außenwand (12a) gemeinsam mit den Profilrahmen (1) in einem Falz eines Feldes der Fassade (100) oder Fensterwand klemmbar ist.

20. Brüstungspaneel nach einem der vorangehenden Ansprüche direkt oder indirekt rückbezogen auf Anspruch 2, dadurch gekennzeichnet, daß die Außenwand (12a) aus NE-Metallen, Glas, Kunststoff oder Photovoltaikelementen besteht.

21. Brüstungspaneel nach einem der vorangehenden Ansprüche, dadurch gekennzeichnet, daß die Innenwand (12b) Bestandteil des Heiz/Kühlkörpers ist.

22. Brüstungspaneel nach einem der vorangehenden Ansprüche direkt oder indirekt rückbezogen auf Anspruch 21, dadurch gekennzeichnet, daß die Dämmschicht (10) aus Mineralwolle besteht.

23. Brüstungspaneel nach Anspruch 1 oder 2 oder einem der Ansprüche 4 bis 21 direkt oder indirekt rückbezogen auf Anspruch 2 dadurch gekennzeichnet, daß die Dämmschicht (10) aus Schaumkunststoff besteht.

24. Brüstungspaneel nach Anspruch 22 oder 23, dadurch gekennzeichnet, daß die Dämmschicht (10) einen Wärmedurchgangskoeffizienten im Bereich von 0,3 bis 2,5 W/m²K aufweist.

25. Brüstungspaneel nach einem der Ansprüche 1 bis 23, dadurch gekennzeichnet, daß die Dämmschicht (10) aus einem Vakuum-Isolations-Paneel besteht.

26. Brüstungspaneel nach Anspruch 25, dadurch gekennzeichnet, daß der Wärmedurchgangskoeffizient im Bereich von 0,3 bis 0,002 W/m²K liegt.

27. Brüstungspaneel nach Anspruch 1 oder 3 oder einem der Ansprüche 4 bis 21 direkt oder indirekt rückbezogen auf Anspruch 3, dadurch gekennzeichnet, daß die Dämmschicht (10) aus einer transparenten Wärmedämmung besteht.

28. Brüstungspaneel nach einem der vorangehenden Ansprüche, dadurch gekennzeichnet, daß der Heizkörper (11) ein Flachheizkörper ist.

29. Brüstungspaneel nach einem der Ansprüche 1 bis 27, dadurch gekennzeichnet, daß der Kühlkörper ein Flachkühlkörper ist.

30. Brüstungspaneel nach Anspruch 28 oder 29, dadurch gekennzeichnet, daß eine Flüssigkeit als Wärme- bzw. Kälteträger dient.

31. Brüstungspaneel nach einem der vorangehenden Ansprüche, dadurch gekennzeichnet, daß der Heiz/Kühlkörper (11) keine Bedienelemente aufweist.

32. Brüstungspaneel nach einem der vorangehenden Ansprüche, dadurch gekennzeichnet, daß der Heiz/Kühlkörper (11) keine Regelelemente aufweist.

33. Brüstungspaneel nach einem der vorangehenden Ansprüche, dadurch gekennzeichnet, daß der Heiz/Kühlkörper (11) eine glatte, zur Dämmschicht (10) zeigende Rückwand aufweist.

34. Brüstungspaneel nach einem der Ansprüche 1 bis 32, dadurch gekennzeichnet, daß der Heiz/Kühlkörper (11) eine profilierte, zur Dämmschicht (10) zeigende Rückwand aufweist.

35. Brüstungspaneel nach einem der vorangehenden Ansprüche, dadurch gekennzeichnet, daß der Heiz/Kühlkörper (11) flexible Anschlußleitungen (7) für die Versorgung mit dem Wärme/Kälteträger aufweist.

36. Brüstungspaneel nach Anspruch 32, dadurch gekennzeichnet, daß die Anschlußleitungen (7) aus Kunststoff sind.

37. Fassade (100) oder Fensterwand, mit mindestens einem Füllelement,
dadurch gekennzeichnet, daß
mindestens ein Füllelement ein Brüstungspaneel (130) nach einem der Ansprüche 1 bis 36 ist.

38. Fassade oder Fensterwand nach Anspruch 37, gekennzeichnet durch einen über dem Brüstungspaneel (130) befindlichen oberen Riegel (120), der an seiner Unterseite abgeschrägt ist.

39. Fassade oder Fensterwand nach Anspruch 38, dadurch gekennzeichnet, daß der obere Riegel (120) einteilig ausgebildet ist.

40. Fassade oder Fensterwand nach Anspruch 38, dadurch gekennzeichnet, daß der obere Riegel (120) aus einem Standard-Riegelprofil (121) und einer damit lösbar verbundenen abgeschrägten Riegeldeckschale (5) besteht.

41. Fassade oder Fensterwand nach einem der Ansprüche 37 bis 40, gekennzeichnet durch einen unter dem Brüstungspaneel (130) befindlichen unteren Riegel (120), der an seiner Oberseite abgeschrägt ist.

42. Fassade oder Fensterwand nach Anspruch 41, dadurch gekennzeichnet, daß der untere Riegel (120) einteilig ausgebildet ist.

43. Fassade oder Fensterwand nach Anspruch 41, dadurch gekennzeichnet, daß der unter Riegel (120) aus einem Standard-Riegelprofil (121) und einer damit lösbar verbundenen abgeschrägten Riegeldeckschale (6) besteht.

44. Fassade oder Fensterwand nach einem der Ansprüche 37 bis 43, dadurch gekennzeichnet, daß die Pfosten (110) und Riegel (120) aus NE-Metallen, Kunststoff, Holz, Stahl oder Edelstahl bestehen.
